# EUROPÄISCHE PATENTSCHRIFT

(11) **EP 0 909 478 B1**
(45) Veröffentlichungstag und Bekanntmachung des Hinweises auf die Patenterteilung: **15.03.2000**
(21) Anmeldenummer: 97930313.8
(22) Anmeldetag: 12.06.1997
(51) Int. Cl.: H02M 3/07

(54) **VORRICHTUNG ZUR SPANNUNGSVERVIELFACHUNG MIT GERINGER ABHÄNGIGKEIT DER AUSGANGSSPANNUNG VON DER VERSORGUNGSSPANNUNG**
VOLTAGE MULTIPLIER WITH AN OUTPUT VOLTAGE PRACTICALLY INDEPENDENT OF THE SUPPLY VOLTAGE
DISPOSITIF PERMETTANT DE MULTIPLIER UNE TENSION SANS FAIRE DEPENDRE LA TENSION DE SORTIE DE LA TENSION D'ALIMENTATION

(30) Priorität: 05.07.1996 DE 19627197
(43) Veröffentlichungstag der Anmeldung: 21.04.1999
(73) Patentinhaber: SIEMENS AKTIENGESELLSCHAFT, 80333 München (DE)
(72) Erfinder: LAUTERBACH, Christl, D-85635 Höhenkirchen-Siegertsbrunn (DE); BLOCH, Martin, D-82194 Gröbenzell (DE)
(86) Internationale Anmeldenummer: DE9701197
(87) Internationale Veröffentlichungsnummer: WO9801938

(56) Entgegenhaltungen:
- EP-A- 0 350 462
- EP-A- 0 678 970

## Beschreibung

Zur Programmierung nichtflüchtiger Speicher, wie zum Beispiel Flash-EEPROMs, wird eine durch sogenannte Spannungspumpen erzeugte "Hochspannung" bis ungefähr 30 V verwendet, wobei diese Spannungspumpen nach dem Prinzip der kapazitiven Spannungsvervielfachung arbeiten und pro Pumpstufe eine MOS-Diode und einen Kondensator aufweisen. Bei integrierten Schaltungen, bei denen starke Schwankungen der Versorgungsspannung zugelassen werden sollen, werden geregelte Spannungspumpen eingesetzt, die eine weitgehend konstante interne Nennspannung gewährleisten. Diese Ladungs- bzw. Spannungspumpen müssen so ausgelegt werden, daß auch mit geringen Versorgungsspannungen, wie beispielsweise 2,5 Volt, noch die intern benötigte Nennspannung, von beispielsweise 5 Volt, erreicht wird. Dies führt jedoch dazu, daß bei hohen Versorgungsspannungen von ca. 5 oder 6 Volt in kurzer Zeit vergleichsweise sehr hohe Spannungen von 20 oder 30 Volt erreicht werden, was zu erheblichen Regelungsproblemen führt.

Aus der Veröffentlichung von A. Umezawa et al, "A 5-V-Only Operation 0,6 µm Flash EEPROM with Row Decoder Scheme in Triple-Well Structure", IEEE Journal of Solid State Circuits, Vol. 27, No. 11 (1992), ist eine Vorrichtung zur Spannungsvervielfachung mit Hochvolt-PMOS-Transistoren und zusätzlichen Boost-Transistoren bekannt. Diese Vorrichtung eignet sich jedoch nicht für integrierte Schaltungen, bei denen starke Schwankungen in der Versorgungsspannung zugelassen werden sollen.

Aus der europäischen Anmeldeschrift 0 350 462 ist eine Regelung der Ausgangsspannung eines Spannungsvervielfachers bekannt, bei dem die Taktsignale von einem Ringoszillator stammen, dessen Frequenz von der Ausgangsspannung abhängt.

Aus der europäischen Anmeldeschrift EP-A-0 135 889 ist eine Schaltung zur Spannungsvervielfachung bekannt, bei der die Substrate der p-Kanal-Transistoren fest mit Versorgungspannung und die Substrate der n-Kanal-Transistoren fest mit Bezugspotential verbunden sind.

Aus der europäischen Anmeldeschrift EP-A-0 678 970 ist eine Schaltung zur Spannungsvervielfachung bekannt, bei der mehrere gleichartige Stufen vorgesehen sind, die jeweils zwei Transistoren und zwei Kondensatoren aufweisen, wobei die Substratanschlüsse aller Transistoren einen gemeinsamen Spannungspegel aufweisen.

Die Aufgabe der Erfindung liegt nun darin, eine Vorrichtung zur Spannungsvervielfältigung anzugeben, die eine geringe Abhängigkeit der Ausgangsspannung von der Pumpspannung beziehungsweise Versorgungsspannung aufweist und für einen möglichst breiten Versorgungsspannungsbereich geeignet ist.

Diese Aufgabe wird erfindungsgemäß durch die Merkmale des Patentanspruchs 1 gelöst. Vorteilhafte Ausgestaltungen ergeben sich aus den Unteransprüchen.

Die Erfindung wird nachfolgend anhand der Zeichnung näher erläutert. Dabei zeigt
- Figur 1: ein Schaltbild einer erfindungsgemäßen Vorrichtung und
- Figur 2: ein Diagramm zur Darstellung der Ausgangsspannung in Abhängigkeit der Pumpspannung in den Fällen einer bekannten Spannungsvervielfachervorrichtung und der erfindungsgemäßen Vorrichtung.

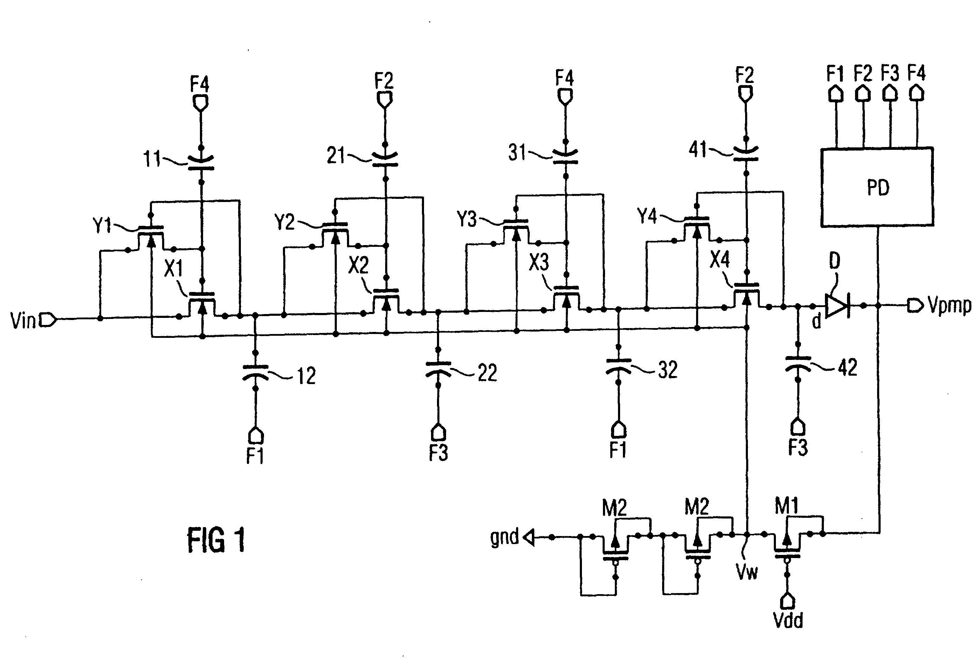

In Figur 1 ist beispielhaft eine vierstufige erfindungsgemäße Vorrichtung zur Erzeugung einer Ausgangsspannung Vpmp dargestellt, wobei eine erste Stufe einen MOS-Transistor X1 und einen NMOS-Transistor Y1 sowie einen Kondensator 11 und einen Kondensator 12, eine zweite Stufe NMOS-Transistoren X2, Y2 sowie Kondensatoren 21, 22, eine dritte Stufe NMOS-Transistoren X3, Y3 sowie Kondensatoren 31, 32 und eine vierte Stufe NMOS-Transistoren X4, Y4 sowie Kondensatoren 41 und 42 aufweist. Eine Eingangsspannung Vᵢₙ der erfindungsgemäßen Vorrichtung ist einem Anschluß des Transistors X1 zugeführt, wobei dieser Anschluß mit dem Gateanschluß des Transistors Y1 verbunden ist und den Eingang der ersten Stufe darstellt. Das Gate des Transistors X1 ist mit einem Anschluß des Transistors Y1 über den Kondensator 11 mit einem Takteingang F1 verbunden. Ein Ausgang der ersten Stufe ist mit einem zweiten Anschluß des Transistors Y1 und einem zweiten Anschluß des Transistors X1 sowie über den Kondensator 12 mit einem Taktsignal F3 verbunden. Ein Eingang der zweiten Stufe ist mit dem Ausgang der ersten Stufe verbunden und der Ausgang der zweiten Stufe ist mit dem Eingang der dritten Stufe verbunden. Der Aufbau der zweiten Stufe entspricht dem Aufbau der ersten Stufe wobei allerdings der Kondensator 21 nicht wie der Kondensator 11 mit dem Taktsignal F4, sondern mit dem Taktsignaleingang F2 und der Kondensator 22 nicht wie der Kondensator 12 mit dem Taktsignaleingang F1, sondern mit dem Taktsignaleingang F3 verbunden ist. Die Stufen 3 und 4 entsprechen in ihrem Aufbau und in ihrer Versorgung mit dem Taktsignal den ersten beiden Stufen und sind der zweiten Stufe nachgeschaltet. Am Ausgang der vierten Stufe ist eine in Durchflußrichtung geschaltete Diode D vorgesehen, an deren Kathodenanschluß die Ausgangsspannung Vpmp anliegt.

Die Boost-Transistoren Y1 ...Y4 steigern zwar die Effizienz der Spannungspumpe, sind jedoch für die Erfindung nicht unbedingt erforderlich.

Aus der Versorgungsspannung Vdd, die hier beispielsweise zwischen 2,5V und 5,5V schwanken kann, werden die Pumptakte F1 und F3 und die Boost-Takte F2 und F4 beispielsweise durch einen Oszillator und eine nachfolgende Triggerlogik erzeugt. Die Taktspannungen F1..F4 schwanken dabei im selben Bereich wie die Versorgungsspannung. Mit Hilfe einer Reglereinheit, beispielsweise einer Proportional/Differential-Reglereinheit PD, derart gebildet, daß sich bei einer entsprechenden Eingangsspannung Vᵢₙ die gewünschte Ausgangsspannung Vpmp auch ohne spezielle Beschaltung der Substratanschlüsse einstellt, sofern ein für die Spannungen geeignter Regler vorliegt.

Als Reglereinheit kann auch ein einfacher P-Regler oder ein effizienterer aber komplizierterer PID-Regler verwendet werden.

Darüber hinaus enthält die erfindungsgemäße Vorrichtung einen geregelten Spannungsteiler, der p-Kanal-Transistoren M1, M2 und M3 aufweist, wobei diese Transistoren M1 ... M3 in Reihe geschaltet sind und die beiden Transistoren M2 und M3 als strombegrenzende Dioden beschaltet sind. Anstelle der strombegrenzenden Dioden sind auch andere strombegrenzende Elemente, wie beispielsweise ein oder mehrere Widerstände, denkbar. Ein erster Anschluß des Transistors M1 ist mit der Ausgangsspannung Vpmp und ein zweiter Anschluß des Transistors M1, dessen Gate mit Vdd beschaltet ist, mit einem ersten Anschluß des Transistors M2 verbunden, wobei der Verbindungsknoten eine Wannenspannung V_{w} liefert, die allen Substratanschlüssen der Transistoren X1 ... X4 sowie Y1 ... Y4 zugeführt wird. Ein zweiter Anschluß und ein Gateanschluß des Transistors M2 ist mit einem Substratanschluß und einem ersten Anschluß des Transistors M3 verbunden. Ein zweiter Anschluß und ein Gateanschluß des Transistors M3 ist mit Bezugspotential gnd verbunden.

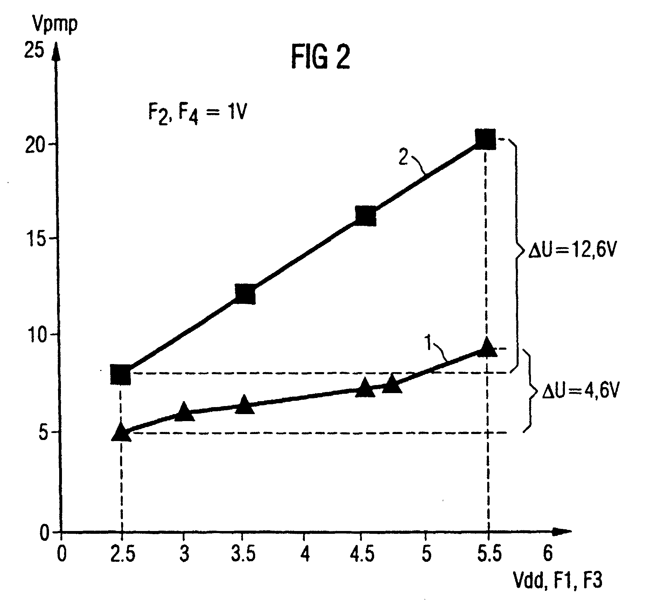

Bei der vorliegenden Erfindung wird der vorhandene Substratsteuereffekt der Hochvolt-CMOS-Transistoren gezielt dazu benutzt, die Spannungspumpen bei kleinen Versorgungsspannungen Vdd effizienter zu machen und sie bei hohen Versorgungsspannungen Vdd so zu verschlechtern, daß eine Regelung wesentlich vereinfacht wird. Die Regelung ist einfacher, weil, wie in Figur 2 gezeigt, der zu regelnde Spannungshub von Vpmp, bei einem Spannungshub von Vdd von hier 2,5V bis 5,5V, von 12,6V auf nur 4,5V reduziert wird.

Zu diesem Zweck müssen bei der geboosteten Ladungspumpe die Boostamplituden auf ca. 1 Volt reduziert werden, damit der Substratsteuereffekt zum Tragen kommt. Der Spannungsteiler der Transistoren M1 ... M3 bewirkt über die Entkopplung der Versorgungsspannung Vdd über das Gate des Transistors M1 eine niedrige Wannenvorspannung Vw an den Substratanschlüssen der Transistoren X1..X4 und ggf. Y1..Y4 bei einer hohen Versorgungsspannung Vdd, was einem niedrigen Substratsteuerfaktor entspricht.

Bei einer Versorgungsspannung Vdd von beispielsweise 2,5 Volt beträgt die Wannenvorspannung Vw beispielsweise ca. 4,3 Volt und erreicht ab einem Versorgungsspannungswert von ca. 4,7 Volt einen Wert von etwa konstant 0,7 Volt. Bei Versorgungsspannungen Vdd von kleiner gleich 3,1 Volt fließt jeweils ein Leckstrom durch die in Vorwärtsrichtung gepolte Diode zwischen Source- und p-Wanne der Transistoren X1..X4 und ggf. Y1..Y4, wodurch die Wannenvorspannung Vw reduziert wird. Für den linear geregelten Bereich des Spannungsteilers aus den Transistoren M1 ... M3, also für Versorgungsspannungen zwischen 3,1 Volt und 4,7 Volt, wird eine Empfindlichkeit der Pumpspannung auf die Ausgangsspannung von 0,9 Volt/1 Volt, gegenüber 4,4 Volt/1 Volt für eine Anordnung ohne den Spannungsteiler aus den Transistoren M1 ... M3 erzielt. Diese geringere Abhängigkeit der Pumpenausgangsspannung von der Versorgungsspannung Vdd führt zu einer erheblichen Vereinfachung der Regelung.

In Figur 2 ist ein Diagramm dargestellt, bei dem die Ausgangsspannung Vpmp über die Amplitude der Boost/Pumppulse F1 ... F4 für die erfindungsgemäße Vorrichtung in einem Graph 1 und für eine entsprechende Vorrichtung ohne den Spannungsteiler aus den Transistoren M1 ... M3 als Graph 2 dargestellt ist. Die Pumpspannungsamplitude der Pulse F1 und F3 entspricht dabei der Versorgungsspannung Vdd und das in Figur 1 gezeigte Diagramm spiegelt folglich qualitativ auch die geringere Abhängigkeit der Pumpspannung Vpmp von der Versorgungsspannung Vdd im Falle der erfindungsgemäßen Vorrichtung wieder. Die Boostpulse weisen vorzugsweise eine Amplitude von 1V auf.

## Patentansprüche

1. Vorrichtung zur Spannungsvervielfachung,
bei der mindestens zwei Pumptransistoren (X1 ... X4) als Reihenschaltung beschaltet sind, wobei ein erster Pumptransistor (X1) direkt mit einem Eingang für eine Eingangsspannung (Vin) und letzter Pumptransistor (X4) direkt oder indirekt mit einem Ausgang für eine Ausgangsspannung (Vpmp) der Vorrichtung verbunden sind,
bei der die Gates der ungeradzahligen Pumptransistoren (X1, X3) über erste Kapazitäten (11, 31) mit einem ersten Taktsignal (F4) und die geradzahligen Pumptransistoren (X2, X4) über weitere erste Kapazitäten (21, 41) mit einem zweiten Taktsignal (F2) beschaltet sind,
bei der ungeradzahlige Verbindungsknoten (X1, X2; X3, X4) deren Einschaltung über zweite Kapazitäten (12, 32) mit einem dritten Taktsignal(F1) und geradzahlige Verbindungsknoten (X2, X3; X4, Vpmp bzw. X4, D) der Reihenschaltung über weitere zweite Kapazitäten (22, 42) mit einem vierten Taktsignal (F3) verbunden sind,
**dadurch gekennzeichnet,**
daß der Ausgang (Vpmp) der Vorrichtung mit einem Regler (PD) verbunden ist, der das erste, zweite, dritte und vierte Taktsignal derart aus- und einschaltet, daß sich bei einer entsprechenden Eingangsspannung (Vin) eine gewünschte Ausgangsspannung (Vpmp) einstellt, und
daß ein Spannungsteiler vorgesehen ist, der eine Teilspannung (Vw) der am Ausgang anliegenden Spannung (Vpmp) allen Substratanschlüssen der mindestens zwei Pumptransistoren (X1 ... X4) zuführt.

2. Vorrichtung nach Anspruch 1,
bei der das Gate eines jeweiligen Pumptransistors über einen jeweiligen Boost-Transistor (Y1 ... Y4) mit dem jeweiligen Verbindungsknoten zum vorausgehenden Pumptransistor und das Gate des jeweiligen Boost-Transistors mit dem je weiligen Verbindungsknoten zum nächsten Pumptransistor oder dem Eingang (Vᵢₙ) der Vorrichtung verbunden sind und bei dem alle Substratanschlüsse der Boost-Transistoren (Y1 ... Y4) und der Pumptransistoren (X1...X4) mit der durch den Spannungsteiler gebildeten Teilspannung (Vw) versorgt sind.

3. Vorrichtung nach Anspruch 1 oder 2,
**dadurch gekennzeichnet,**
daß der Spannungsteiler aus einer Reihenschaltung von einem p-Kanal-MOS-Transistor (M1) und einem strombegrenzenden Element (M2 ,M3) gebildet ist, bei dem die Teilspannung (Vw) an einem Verbindungsknoten zwischen dem p-Kanal-MOS-Transistor (M1) und dem strombegrenzenden Element (M2 ,M3) anliegt,das mit Bezugspotential (gnd) verbunden ist, wobei ein vom Verbindungsknoten verschiedener Anschluß des ersten MOS-Transistors (M1) mit dem Ausgang der Vorrichtung (Vpmp) und der Gateanschluß des p-Kanal-MOS-Transistors (M1) mit der Versorgungsspannung (Vdd) verbunden ist.

4. Vorrichtung nach Anspruch 3, bei der zwei weiteren MOS-Transistoren (M2, M3) als Dioden geschaltet sind und das strombegrenzende Element bilden.

5. Vorrichtung nach einem der vorhergehenden Ansprüche, bei dem die Reglereinrichtung (PD) zum An-und Ausschalten der Pump- und Boost-Takte (F1..F4) einen Proportional/Differential-Regler aufweist.

## Claims

1. Apparatus for voltage multiplication,
in which at least two pump transistors (X1 ... X4) are connected as a series circuit, a first pump transistor (X1) being connected directly to an input for an input voltage (Vᵢₙ) and a last pump transistor (X4) being connected directly or indirectly to an output for an output voltage (Vpmp) of the apparatus,
in which the gates of the odd-numbered pump transistors (X1, X3) are connected via first capacitors (11, 31) to a first clock signal (F4) and the even-numbered pump transistors (X2, X4) are connected via further first capacitors (21, 41) to a second clock signal (F2),
in which odd-numbered connection nodes (X1, X2; X3, X4) whose connection are connected via second capacitors (12, 32) to a third clock signal (F1) and even-numbered connection nodes (X2, X3; X4, Vpmp or X4, D) of the series circuit are connected via further second capacitors (22, 42) to a fourth clock signal (F3),
characterized in that the output (Vpmp) of the apparatus is connected to a regulator (PD), which switches the first, second, third and fourth clock signals off and on in such a way that, given a corresponding input voltage (Vᵢₙ), a desired output voltage (Vₚₘₚ) is established, and, in that a voltage divider is provided, which feeds a partial voltage (Vw) of the voltage (Vₚₘₚ) present at the output to all substrate terminals of the at least two pump transistors (X1 ... X4).

2. Apparatus according to Claim 1,
in which the gate of a respective pump transistor is connected via a respective boost transistor (Y1 ... Y4) to the respective connection node to the preceding pump transistor, and the gate of the respective boost transistor is connected to the respective connection node to the next pump transistor or to the input (Vᵢₙ) of the apparatus, and
in which all the substrate terminals of the boost transistors (Y1 ... Y4) and of the pump transistors (X1 ... X4) are supplied with the partial voltage (Vw) formed by the voltage divider.

3. Apparatus according to Claim 1 or 2, characterized
in that the voltage divider is formed by a series circuit of a p-channel MOS transistor (M1) and a current-limiting element (M2, M3), in which the partial voltage (Vw) is present at a connection node between the p-channel MOS transistor (M1) and the current-limiting element (M2, M3) which is connected to reference-earth potential (gnd), a terminal of the first MOS transistor (M1) other than the connection node being connected to the output of the apparatus (Vpmp), and the gate terminal of the p-channel MOS transistor (M1) being connected to the supply voltage (Vdd).

4. Apparatus according to Claim 3, in which two further MOS transistors (M2, M3) are connected as diodes and form the current-limiting element.

5. Apparatus according to one of the preceding claims, in which the regulator device (PD) for switching the pump and boost clock signals (F1 ... F4) on and off has a proportional/derivative regulator.

## Revendications

1. Dispositif de multiplication de tension dans lequel
au moins deux transistors de pompage (X1 à X4) sont branchés en un circuit série, un premier transistor de pompage (X1) étant relié directement à une entrée destinée à une tension d'entrée (Vin) et un dernier transistor de pompage (X4) étant relié directement ou indirectement à une sortie destinée à une tension de sortie (Vpmp) du dispositif,
les grilles des transistors de pompage impairs (X1, X3) sont reliées par l'intermédiaire de premières capacités (11, 31) à un premier signal de cadence (F4) et les transistors de pompage pairs (X2, X4) sont reliés par l'intermédiaire d'autres premières capacités (21, 41) à un deuxième signal de cadence (F2),
des noeuds de jonction impairs (X1, X2 ; X3, X4) du branchement série sont reliés par l'intermédiaire de deuxièmes capacités (12, 32) à un troisième signal de cadence (F1) et des noeuds de jonction pairs (X2, X3 ; X4, Vpmp ou X4, D) du branchement série sont reliés par l'intermédiaire d'autres deuxièmes capacités (22, 42) à un quatrième signal de cadence (F3),
caractérisé par le fait que
la sortie (Vpmp) du dispositif est reliée à un régulateur (PD) qui débranche et branche le premier, deuxième, troisième ou quatrième signal de cadence de telle sorte qu'il s'établisse pour une tension d'entrée (Vin) correspondante une tension de sortie (Vpmp) souhaitée, et que
il est prévu un diviseur de tension qui envoie une tension partielle (Vw) de la tension (Vpmp), présente à la sortie, à toutes les bornes de substrats des au moins deux transistors de pompage (X1 à X4).

2. Dispositif selon la revendication 1, dans lequel
la grille d'un transistor de pompage respectif est reliée par l'intermédiaire d'un transistor Boost respectif (Y1 à Y4) au noeud de jonction respectif vers le transistor de pompage précédent et la grille du transistor Boost respectif est reliée au noeud de jonction respectif vers le transistor de pompage suivant ou à l'entrée (Vᵢₙ) du dispositif, et
dans lequel toutes les bornes de substrats des transistors Boost (Y1 à Y4) et des transistors de pompage (X1 à X4) sont alimentés avec la tension partielle (Vw) formée par le diviseur de tension.

3. Dispositif selon la revendication 1 ou 2,
caractérisé par le fait que le diviseur de tension est formé d'un branchement série d'un transistor MOS à canal p (M1) et d'un élément (M2, M3) limitant le courant, la tension partielle (Vw) étant présente à un noeud de jonction entre le transistor MOS à canal p (M1) et l'élément (M2, M3) limitant le courant et relié au potentiel de référence (gnd), une borne, différente du noeud de jonction, du premier transistor MOS (M1) étant reliée à la sortie (Vpmp) du dispositif et la borne de grille du transistor MOS à canal p (M1) étant reliée à la tension d'alimentation (Vdd).

4. Dispositif selon la revendication 3, dans lequel deux autres transistors MOS (M2, M3) sont branchés comme des diodes et forment l'élément limitant le courant.

5. Dispositif selon l'une des revendications précédentes, dans lequel le dispositif de régulation (PD) comporte un régulateur proportionnel et par dérivation pour brancher et débrancher les cadences de pompage et Boost (F1 à F4).
